# EUROPÄISCHE PATENTSCHRIFT

(11) **EP 1 247 085 B1**
(45) Veröffentlichungstag und Bekanntmachung des Hinweises auf die Patenterteilung: **15.02.2006**
(21) Anmeldenummer: 00991575.2
(22) Anmeldetag: 22.12.2000
(51) Int. Cl.: G01N 1/36

(54) **VERFAHREN ZUR HERSTELLUNG VON MATERIALBLÖCKEN MIT EINER VIELZAHL VON ZU UNTERSUCHENDEN PROBEN**
METHOD FOR PRODUCING MATERIAL BLOCKS CONTAINING A PLURALITY OF SAMPLES TO BE ANALYSED
PROCEDE DE PRODUCTION DE BLOCS DE MATIERE COMPORTANT UNE PLURALITE D'ECHANTILLONS A ANALYSER

(30) Priorität: 13.01.2000 DE 10001136
(43) Veröffentlichungstag der Anmeldung: 09.10.2002
(73) Patentinhaber: von Wasielewski, Reinhard, 30657 Hannover (DE); Mengel, Michael, 30659 Hannover (DE)
(72) Erfinder: von Wasielewski, Reinhard, 30657 Hannover (DE); Mengel, Michael, 30659 Hannover (DE)
(74) Vertreter: Graf Lambsdorff, Matthias
(86) Internationale Anmeldenummer: PCT/DE2000/004647
(87) Internationale Veröffentlichungsnummer: WO 2001/051910

(56) Entgegenhaltungen:
- EP-A- 0 142 574
- DE-A- 2 924 928
- FR-A- 2 502 539
- FR-A- 2 667 938
- GB-A- 2 144 366
- US-A- 4 443 395
- US-A- 4 914 022
- US-A- 5 002 377
- KONONEN ET AL: "Tissue microarrays for high-throughput molecular profiling of tumour specimens" NATURE MEDICINE,NATURE PUBLISHING, CO,US, Bd. 4, Nr. 7, Juli 1998 (1998-07), Seiten 844-847, XP002160224 ISSN: 1078-8956 in der Anmeldung erwähnt

## Beschreibung

Die Erfindung betrifft ein Verfahren zur Herstellung eines Materialrohlings enthaltend eine Mehrzahl von Öffnungen für die Aufnahme von zu untersuchenden Gewebeproben nach den Merkmalen des Patentanspruchs 1 und ein Verfahren zur Herstellung dünner Probenschnitte enthaltend eine Mehrzahl von zu untersuchenden Proben nach den Merkmalen des Patentanspruchs 2.

Die vorliegende Erfindung liegt auf dem Gebiet der Untersuchung oder Bearbeitung von Gewebeproben menschlicher, tierischer oder pflanzlicher Gewebe sowie von Mikroorganismen, Zellkulturen oder Makromolekülen in einer Matrix mit an sich im Stand der Technik bekannten Verfahren wie beispielsweise histologischen oder immunohistochemischen Untersuchungstechniken. Um eine Mehrzahl von Proben in vertretbarer Zeit untersuchen zu können, wurden im Stand der Technik verschiedene Verfahren zur Herstellung von Gewebeschnitten mit multiplen Gewebeproben entwickelt, mit denen diese Untersuchungen simultan durchgeführt werden können. Die simultane Untersuchung von multiplen Gewebeproben in einem Gewebeschnitt bietet zahlreiche Vorteile. Für die verschiedenen Untersuchungstechniken wie Histologie, Histochemie, Immunhistochemie, In-situ-Hybridisierung ist neben einer erheblichen Kosten- und Zeitersparnis gewährleistet, daß alle simultan untersuchten Proben unter identischen Labor- und Untersuchungsbedingungen getestet werden, was eine Qualitätskontrolle bzw. -sicherung der Untersuchungsergebnisse erlaubt. Für die Herstellung von Multi-Blöcken sollte das eingesetzte Verfahren die folgenden Voraussetzungen erfüllen:
1. Nach der Einbettung der Gewebeproben muß eine Orientierung, z.B. Zuordnung der einzelnen Proben zu ihrem Ursprung möglich sein (welche Probe gehört zu welchem Patienten).
2. Der Gewebeblock sollte für sämtliche Routinemethoden der Gewebebearbeitung (verschiedene Färbetechniken) geeignet sein und keiner gesonderten bzw. spezifischen Weiterverarbeitung nach der Herstellung mehr bedürfen (z.B. besondere Schneidetechnik).
3. Die Anwendung sollte mit geringem Arbeitsaufwand in kurzer Zeit ohne große Kosten möglich sein.
4. Die Gewebe- und Schnittqualität des Multi-Blocks sollte identisch zu der von Standardblöcken sein, die üblicherweise aus Paraffin hergestellt werden.
5. Die Gewebeproben sollten eine repräsentative Probengröße haben, um eine sichere Auswertung zu gewährleisten.
6. Die Gewebeproben sollten zur langfristigen Archivierung geeignet sein.

Im Stand der Technik sind bereits zahlreiche Verfahren zur Herstellung von Paraffinblöcken mit multiplen Gewebeproben beschrieben worden, die jeweils verschiedene Vor- und Nachteile bieten. Keines der zahlreichen Verfahren erlaubt jedoch die Herstellung eines Paraffinblocks mit multiplen Gewebeproben, der anschließend wie ein gewöhnlicher Standard-Paraffinblock ohne Einschränkungen weiterverarbeitet werden kann und gleichzeitig einfach, kostengünstig und bei geringem Zeitaufwand hergestellt werden kann.

Die U.S.-PS 4,820,504 und U.S.-PS 5,002,377 beschreiben Verfahren, bei denen das Ausgangsgewebe zunächst deparaffiniert werden muß, um dann später in Form stabförmiger Gewebestücke wieder in Paraffin eingebettet zu werden. Diese Verfahren sind zum einen zeit- und arbeitsintensiv und zum anderen kann dazu in der Regel kein gewöhnliches Archivmaterial verwendet werden, da sich hieraus meistens keine stabförmigen Gewebestücke mehr gewinnen lassen, weil viele archivierte Gewebeproben dazu zu klein sind. Ferner müssen die aufwendig präparierten stabförmigen Gewebestücke vor der Wiedereinbettung in Paraffin zunächst in ein fragiles Medium (Agar) überführt werden und dabei in speziell gefertigte Haltevorrichtungen (Moles) eingebracht werden, damit später eine orientierende Einbettung in den Gewebeblock mit multiplen Gewebeproben möglich ist.

In der U.S.-PS 4,914,022 wird ein Verfahren beschrieben, bei dem aus archivierten Standard-Paraffinblöcken mittels einer Hohlnadel Gewebestanzzylinder gewonnen werden, die dann mit einem Platzhalter (Strohhalm) in einen neuen Paraffinblock eingebettet werden. Dieses Verfahren bietet jedoch nur eine eingeschränkte Orientierung der multiplen Gewebestanzzylinder, da in einem Platzhalter mehrere (24 oder mehr) Gewebestanzzylinder zusammen eingebettet werden.

Ferner beschreiben Kononen et al. in der WO 99/44062 und in "Nature Medicine 4:844-847", 1998, die Herstellung von Paraffinblöcken mit multiplen Gewebeproben durch eine technisch aufwendige Maschine, die ebenfalls mittels einer Hohlnadel Gewebestanzzylinder aus archivierten Standard-Paraffinblöcken gewinnt. Der Einsatz der Maschine erlaubt bei Verwendung sehr dünner Nadeln die Herstellung von Gewebeblöcken mit einer großen Anzahl (bis 1000) von Gewebeproben, die orientiert in den Gewebeblock eingebracht werden können. Das Verfahren besitzt jedoch eine Reihe von Nachteilen:
- hohe Anschaffungskosten für die Maschine,
- die zeitgleiche Herstellung von mehreren Gewebeblöcken mit multiplen Gewebeproben (kommerzielle Anwendung als Dienstleistung) setzt das Vorhandensein von mehreren Maschinen voraus,
- die große Anzahl der damit sehr kleinen Proben (500-600 µm Durchmesser) erfordert einen sehr präzisen und damit zeitaufwendigen Einsatz der Maschine. Ferner ist die Größe des auswertbaren Gewebes sehr klein und damit die Beurteilbarkeit eingeschränkt.
- Die sehr dünnen Gewebestanzzylinder sind fragil und können daher praktisch nicht archiviert werden.
- Die gewonnenen Stanzen müssen in spezielles, weicheres Paraffin eingebracht werden. Der hergestellte Paraffinblock mit multiplen Gewebeproben kann dann nur unter Verwendung einer Spezialfolie geschnitten bzw. weiterverarbeitet werden. Diese Folie muß vor jedem Gewebeschnitt auf den Block aufgebracht werden, um ein sogenanntes Auseinanderschwimmen des Paraffinschnittes auf dem Wasserbad zu verhindern. Zusätzlich ist es nicht möglich, dabei entsprechend dünne Schnittpräparate (8 µm statt normal 2-5 µm) anzufertigen, was die Beurteilbarkeit verschiedener Färbeergebnisse erheblich einschränken kann.

Der vorliegenden Erfindung liegt somit die Aufgabe zugrunde, ein Verfahren zur Herstellung eines Materialblocks enthaltend eine Mehrzahl von zu untersuchenden Proben, insbesondere Gewebeproben anzugeben, durch welches sich mit geringem Arbeitsaufwand und verhältnismäßig kurzer Zeit ein derartiger Materialblock herstellen läßt. Gleichzeitig soll bezüglich der eingebetteten Gewebeproben eine Orientierung bzw. Zuordnung der einzelnen Proben zu ihrem Ursprung möglich sein. Die Qualität des Materialblocks sollte derart beschaffen sein, daß er für sämtliche Routinemethoden der Gewebebearbeitung geeignet ist und keiner gesonderten bzw. spezifischen Weiterverarbeitung nach der Herstellung mehr bedarf und die Gewebe- und Schnittqualität des Materialblocks identisch der von Standard-Paraffinblöcken ist. Ferner sollen die in dem Materialblock eingebetteten Gewebeproben eine repräsentative Probengröße haben, um eine sichere Auswertung zu gewährleisten, und die Gewebeproben sollten zur langfristigen Archivierung geeignet sein.

Diese Aufgaben werden durch die Merkmale des Patentanspruchs 1 gelöst.

Vorteilhafte Weiterbildungen und Ausgestaltungen sind Gegenstand von Unteransprüchen.

In einer weiter unten noch im Detail beschriebenen Ausführungsart der Erfindung wird als Material für den Materialrohling Paraffin verwendet. Dabei werden die in den Materialrohling geformten Öffnungen als Durchgangsöffnungen ausgebildet.

Die Erfindung umfaßt somit insbesondere ein neues, optimiertes Verfahren zur Herstellung von Materialblöcken mit multiplen Gewebeproben (Multi-Blöcken). Dieses Verfahren bietet alle Vorteile der bisher bekannten Verfahren und darüber hinaus werden deren Nachteile umgangen, so daß als Endprodukt ein Multi-Block entsteht, der wie ein Standard-Paraffinblock weiterverarbeitet werden kann.

Das hier vorgestellte Verfahren basiert vorzugsweise auf der Gewinnung von Gewebestanzzylindern, die mit einer Hohlnadel aus in gewöhnlichem Paraffin eingebetteten Gewebeproben herausgestanzt werden. Anschließend werden diese Gewebestanzzylinder zur orientierenden Einbettung in einen sogenannten Paraffinrohling eingebracht, der mittels der entsprechenden Gußform hergestellt wurde. Vorzugsweise entsteht dann durch ein Doppel-Schmelz-Verfahren aus einem Paraffinrohling mit multiplen Gewebestanzzylindern ein homogener, stabiler Multi-Block, der normal geschnitten und mit allen gängigen Verfahren bearbeitet werden kann.

Als Vorteile des erfindungsgemäßen Verfahrens sind insbesondere zu nennen:
1. Für die Gewinnung der Gewebestanzzylinder können große, konventionelle Archive von Standard-Paraffinblöcken, z.B. in anatomischen oder pathologischen Instituten, genutzt werden. Auch relativ kleine archivierte Gewebeproben können als Ausgangsgewebe dienen. Ein Deparaffinieren und anschließendes Um- bzw. Wiedereinbetten des gewonnenen Gewebes ist nicht nötig, ebenso kein zwischenzeitliches Einbetten in Agar. Die Gewebestanzzylinder können mit jeder Art von Hohlnadel (z.B. gewöhnliche medizinische Gewebebiopsienadeln) gewonnen werden. Der Durchmesser der Hohlnadel und damit der Gewebestanzzylinder und damit entsprechend der beurteilbaren Gewebeprobe kann dabei variabel gewählt werden. Die Gewinnung der Gewebestanzzylinder kann an jedem Ort ohne große Vorkenntnis mit minimalem technischen Aufwand durchgeführt werden. Durch vorherige mikroskopische Inspektion eines konventionell (Hämatoxilin-Eosin) gefärbten Gewebeschnittes können aus den Archivblöcken gezielt Gewebestanzzylinder aus Gewebearealen, die von Interesse sind, gewonnen werden. Die gewonnenen Gewebestanzzylinder können selbst wiederum einfach und sicher archiviert werden.
2. Der mittels der Gußform hergestellte Materialrohling erlaubt die exakte orientierende Einbettung der Gewebestanzzylinder. Er besteht vorzugsweise aus homogenem Paraffin und enthält kein Fremdmaterial als Platzhalter, das bei der weiteren Bearbeitung des Blockes beeinträchtigend wirken könnte und ist ferner einfach, kostengünstig und rasch herzustellen. Er kann an jeden Ort versandt werden und dort mit im Durchmesser entsprechenden Gewebestanzzylindern bestückt werden und anschließend unter Anwendung des Doppel-Schmelz-Verfahrens zum Multi-Block vollendet werden. Damit ist die eigentliche Herstellung eines Multi-Blocks unabhängig von zusätzlichem technischem Gerät durchführbar, lediglich eine handelsübliche Pinzette erleichtert das Bestücken des Materialrohlings mit den Gewebestanzzylindern.
3. Als Gußform wird eine erstmals beschriebene Anordnung zur einfachen, kostengünstigen und raschen Herstellung von Materialrohlingen verwendet. Diese Gußform ist die Grundlage für die später entscheidende orientierende Einbettung der multiplen Gewebestanzzylinder. Sie ermöglicht die Herstellung des Materialrohlings zeitlich und räumlich unabhängig von der Gewinnung der Gewebestanzzylinder, der Bestückung der Materialrohlinge sowie von der Herstellung von Multi-Blöcken.
4. Ein vorzugsweise zur festen Verbindung zwischen den Gewebestanzzylindern und dem Materialrohling verwendetes Doppel-Schmelz-Verfahren ermöglicht die Herstellung eines homogenen, stabilen Gewebeblocks mit multiplen Gewebeproben, der ohne technische oder methodische Einschränkungen bzw. Zusätze weiterverarbeitet werden kann. Das gleichmäßige, zeitversetzte Erwärmen des mit multiplen Gewebestanzzylindern bestücken Materialrohlings von Unter- und Oberseite gewährleistet einerseits, daß die konstante Orientierung der Gewebestanzzylinder erhalten bleibt und gleichzeitig eine homogene Verschmelzung des Materials des Rohlings mit dem Material in den Gewebestanzzylindern, was dem fertigen Multi-Block eine hohe Stabilität verleiht. Das Verfahren ist ohne großen technischen Aufwand durchzuführen und damit in jedem Labor anwendbar.

Zusammengefaßt bietet die vorgestellte Erfindung die Möglichkeit, einerseits Gewebeblöcke mit multiplen Gewebeproben als Dienstleistungen für andere Institutionen herzustellen, aber auch andererseits das technisch wenig aufwendige Verfahren komplett (z.B. in Form eines Baukastensystems) oder in Teilen (z.B. nur Materialrohlinge) an andere Institutionen abzugeben.

Eine wesentliche Anwendung derartiger Multi-Blöcke ist die schnelle und effektive Austestung und Charakterisierung von monoklonalen und polyklonalen Antikörpern bezüglich ihrer Spezifität und Sensitivität. Der Einsatz von monoklonalen und polyklonalen Antikörpern ist von großer Bedeutung für Diagnose, Charakterisierung, Stadieneinteilung und Therapieentscheidung in der modernen Pathologie sowie für zahlreiche wissenschaftliche Fragestellungen. Jedoch muß vor dem Einsatz eines neuen Antikörpers seine Spezifität, also sein Reaktionsmuster mit normalem und pathologischem Gewebe, ausgetestet werden, was normalerweise mittels immunhistochemischer Techniken erfolgt. Dazu muß der entsprechende Antikörper mit zahlreichen normalen und pathologischen Gewebearten ausgetestet werden, ein sehr zeit-, arbeits- und kostenintensives Vorgehen, das durch Multi-Blöcke erheblich verkürzt wird. Diese Vorgehensweise ist natürlich auf alle anderen, an Paraffinmaterial etablierten Untersuchungstechniken neben der Immunhistochemie übertragbar, wie z.B. histochemische und biochemische Färbereaktionen und verschiedene Hybridisierungstechniken (In situ, fluorescence in situ hybridisation) (Fish), in situ-PCR, in situ Methylierungs-PCR). In all diesen Labortechniken bedeutet der Einsatz von Multi-Blöcken vor allem eine Zeit- und Kostenersparnis und die Bereitstellung identischer Laborbedingungen, die damit auch eine Beschleunigung in der Bearbeitung von wissenschaftlichen Fragestellungen erlaubt. Ebenso können wissenschaftliche Untersuchungen an großen Patientenkollektiven schneller und kostengünstiger durchgeführt und ausgewertet werden.

Das beschriebene Verfahren ist dabei nicht auf die Untersuchung von menschlichem Gewebe beschränkt. Tierische und pflanzliche Gewebe können ebenso wie Mikroorganismen und kultivierte Zellen sowie Makromoleküle in einer Matrixgrundlage schneller und kostengünstiger untersucht werden.

Ein weiterer, immer mehr an Bedeutung gewinnender Vorteil dieser Technik ist die verbesserte Qualitätskontrolle und gleichzeitige Qualitätssicherung, die diesem Verfahren inherent ist. Da alle Proben unter identischen Labor- und Testbedingungen simultan untersucht werden, sind falsch-positive und falsch-negative Ergebnisse rasch zu erkennen. Der Einsatz von exakt charakterisierten Zellkulturen in Form von Multi-Blöcken mit multiplen verschiedenen Zellkulturen kann dabei vor allem in der mittlerweile zum diagnostischen Routineverfahren gewordenen Immunhistochemie wesentlich zur Qualitätssicherung und möglicherweise auch zur Quantifizierung der Ergebnisse beitragen.

Zusammengefaßt bietet die vorliegende Erfindung ein Verfahren zur einfachen, raschen, flexiblen, kostengünstigen und zuverlässigen Herstellung von Gewebeblöcken mit multiplen Gewebeproben, die die simultane Untersuchung multipler verschiedener menschlicher, tierischer oder pflanzlicher Gewebe sowie von Mikroorganismen oder Zellkulturen mit allen bekannten, an Paraffin eingebetteten Geweben etablierten Untersuchungstechniken ohne technische oder methodische Zusätze bzw. Einschränkungen erlaubt.

Im folgenden wird eine einzige Ausführungsart der vorliegenden Erfindung anhand der Zeichnungen näher erläutert. Es zeigen:
- Fig. 1a-c: die Einzelteile einer Gußform für den Materialrohling;
- Fig. 2a,b: die Herstellung eines Materialrohlings mittels der Gußform;
- Fig. 3a,b: das Einbringen von Gewebeproben in den Materialrohling;
- Fig. 4a,b: die feste Verbindung der Gewebeproben mit dem Materialrohling durch Temperaturbehandlungsschritte;
- Fig. 5a-c: das Aufbringen einer Einbettkassette auf den Materialblock und das nachfolgende Befüllen der Ein- bettkassette mit weiterem, härtbarem Material und das nachfolgende Entfernen einer Einbettschale;
- Fig. 6a,b: der fertiggestellte, durch die Einbettkassette gehalterte Materialblock in einer Seitenansicht und einer Draufsicht mit einer zur Orientierung dienenden Gewebeprobe.

Die Grundlage der Herstellung von Multi-Blöcken ist die Produktion eines Materialrohlings, insbesondere eines Paraffinrohlings, in den später die Gewebeproben, insbesondere Gewebestanzzylinder, eingebracht werden können. Dieser Paraffinrohling hat die Größe von ca. 40 x 25 mm und ist damit kompatibel mit herkömmlichen Paraffinblöcken. Daher kann der fertige Multi-Block ohne spezielle Hilfsmittel oder -techniken in Routinelaboratorien geschnitten und weiterbearbeitet werden.

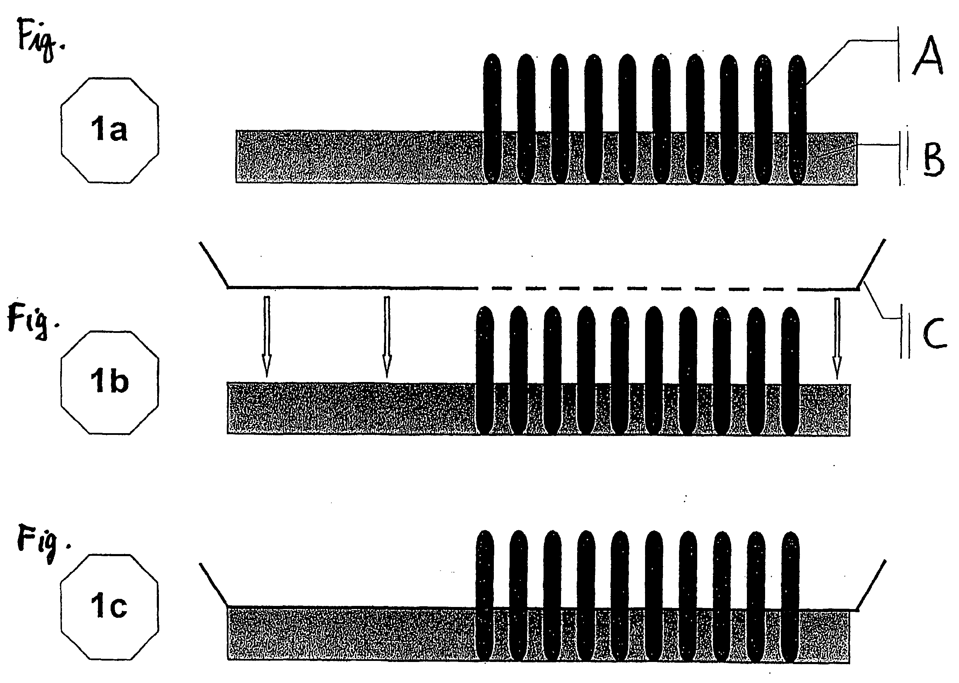

Die Paraffinrohlinge werden in einer speziellen Gußform in Direktgußtechnik hergestellt. Die Zusammenstellung der Gußform ist in den Fig. 1a-c dargestellt, wobei die fertiggestellte Gußform in der Fig. 1c gezeigt ist. Die Gußform besteht z.B. aus einem Aluminiumblock B, in den beispielsweise zwischen 60 bis zu 120 Zylinderstifte A (zapfenförmige Elemente) mit einem Durchmesser von z.B. 1,5 mm (DIN7) mittels vorgebohrter Löcher eingetrieben worden sind. Die Zylinderstifte sind parallel zueinander angeordnet und sitzen unverrückbar fest in dem Aluminiumblock. Der Aluminiumblock weist beispielsweise eine Kantenlänge von 40 x 28 mm und eine Höhe von 11 mm auf. In diesen Block werden beispielsweise 96 Löcher mit 1,5 mm Durchmesser gebohrt. In alle 96 Löcher werden bündig 96 spezialgehärtete Zylinderstifte von 1,5 mm Durchmesser und 20 mm Länge eingeschlagen. In Fig. 1a ist ein entsprechendes Zwischenprodukt in einem Querschnitt durch eine Ebene einer Stiftreihe dargestellt.

Eine weitere Ausführungsform der Gußform besteht aus einer Aluminiumplatte, in die nach oben beschriebener Art beliebig viele Löcher gebohrt und Zylinderstifte eingetrieben wurden. Auf die Aluminiumplatte wird anstelle der vorgebohrten Einbettschale eine zum Beispiel 2-5 mm dicke Platte aus V2A Stahl mit paßgenauen Löchern von zum Beispiel 1,6 mm Durchmesser gesetzt, die am Rand zum Beispiel 5 mm erhöht ist. Mit dieser Anordnung kann ein Mehrfachrohling hergestellt werden, von dem Stücke mit der benötigten Lochanzahl abgetrennt und die wie Einfachrohlinge weiterverarbeitet werden können.

Gemäß Fig. 1b ist eine Einbettschale C, wie sie üblicherweise in einem histologischen Labor zum Paraffinausgießen von Gewebeblöcken benutzt wird, mit korrespondierenden Bohrungen modifiziert worden, so daß sie über die Zylinderstifte der Gußform direkt auf den Aluminiumblock aufgesetzt werden kann und schlüssig auf diesem aufliegt (s. Fig. 1c). Es kann beispielsweise eine handelsübliche Einbettschale von 37 x 24 x 5 mm verwendet werden, die durch zentrisch in die Vertiefung gebohrte Löcher modifiziert wurde. Es sind so z.B. 96 Löcher mit 1,6 mm Durchmesser in regelmäßiger 8 x 12-Anordnung gebohrt worden. Der Abstand der Lochmittelpunkte einer Reihe beträgt 1,9 mm, so daß alle Bohrungen in einem Feld von 14,9 x 22,5 mm resultieren.

In gleicher Weise können auch Gußformen mit anderen Loch- und Zylinderstiftanzahlen, wie z.B. 60 in 6 x 10-Anordnung oder 24 in 4 x 6-Anordnung, verwendet werden. Weiterhin kann auch der Durchmesser der Zylinderstifte und der Löcher in der modifizierten Einbettschale variiert werden.

Gemäß Fig. 1c wird die modifizierte Einbettschale derart auf den Aluminiumblock gesteckt, daß die konvexe Seite der modifizierten Einbettschale auf dem Aluminiumblock flächig aufliegt. Auf der konkaven Seite der Schale zeigen die durch sie gesteckten Zylinderstifte dabei senkrecht nach oben.

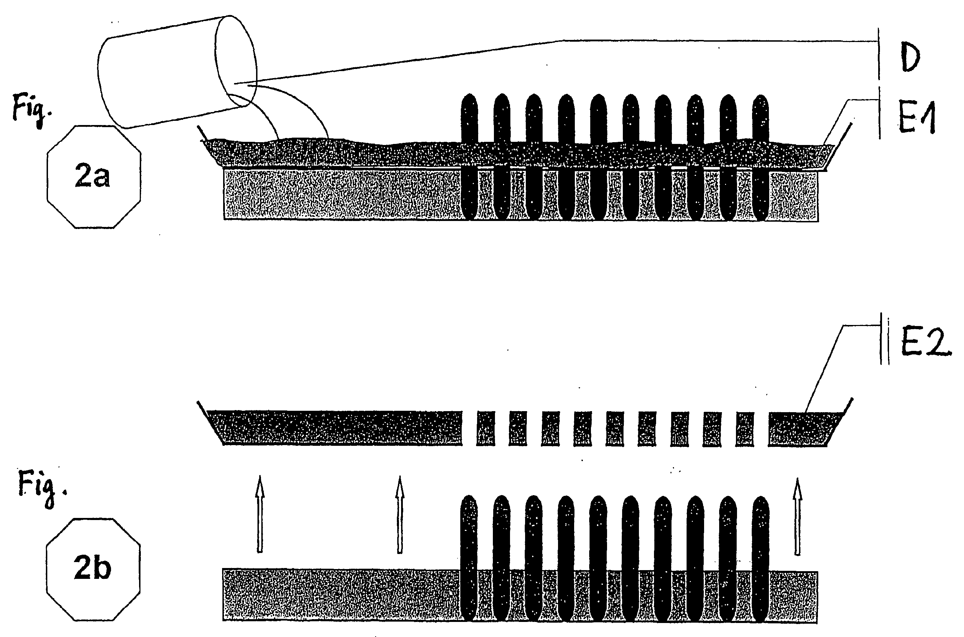

In den Fig. 2a, b wird nun beschrieben, wie der Materialrohling hergestellt wird. Zu diesem Zweck wird die Gußform der Fig. 1c auf einer regulierbaren Heizplatte auf ca. 65° vorgewärmt. In diese Anordnung werden ca. 3,5 ml auf 70° erwärmtes Paraffin D in die modifizierte Einbettschale eingegossen, so daß es auch zwischen die Zylinderstifte fließt. Eine ausreichende Anfangstemperatur ist dabei notwendig, bzw. ein leichtes Vorwärmen der Zylinderstifte, damit es nicht zu einer zu raschen Abkühlung und damit Erhärtung des Paraffins kommt. Anschließend wird der Rohling E1 durch langsames Abkühlen auf Raumtemperatur verfestigt.

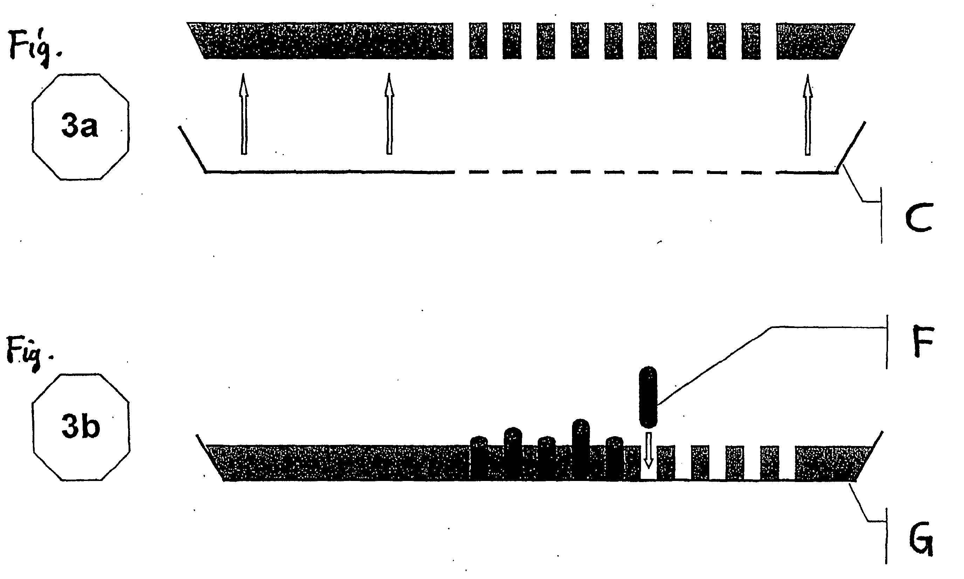

Ist der Paraffinrohling E2 vollständig erhärtet, wird der Aluminiumblock B erneut vorsichtig leicht erwärmt (< 40°C, damit der Schmelzpunkt von handelsüblichem Paraffin von 56°C nicht überschritten wird), um das Abziehen der modifizierten Einbettschale C einschließlich des Paraffinrohlings E2 zu erleichtern. Wie in Fig. 3a gezeigt, wird durch anschließendes Kühlen (4°C) und vorsichtiges Beklopfen der Paraffinrohling E2 aus der modifizierten Einbettschale herausgelöst. Die so hergestellten Paraffinrohlinge können bei Raumtemperatur ohne zeitliche Begrenzung gelagert werden. Sie können somit auf Vorrat hergestellt und gegebenenfalls verschickt werden.

In Fig. 3b ist dargestellt, wie in den Paraffinrohling Gewebeproben, insbesondere Gewebestanzzylinder F, eingebracht werden, wobei der Rohling in eine konventionelle Einbettschale G zur besseren Handhabung gelegt wird. Dadurch ist auch gewährleistet, daß keine Gewebestanzzylinder beim Einschieben von oben durch den Paraffinrohling durchfallen können und verlorengehen.

In die auf die oben beschriebene Weise präformierten Hohlräume des Paraffinrohlings werden Gewebestanzzylinder von 1,5 mm Durchmesser und 3-8 mm Länge eingebracht und diese zu einem einheitlichen Multi-Block verschmolzen. Zur Herstellung dieser Gewebestanzzylinder werden eine Hohlnadel sowie ein paßgenauer Stempel benötigt. Hohlnadel und Stempel werden beispielsweise aus herkömmlichen Biopsienadeln gefertigt, wie sie in der klinischen Gewinnung von Gewebebiopsien verwendet werden. Die Biopsienadel wird abgelängt, plangeschliffen und die äußere Kante der Hohlnadel angeschliffen. Mit Hilfe der so hergestellten Hohlnadel werden mit der Hand Zylinder von 3-8 mm Länge aus Paraffinblöcken gestochen und die Gewebestanzzylinder mit dem Stempel aus der Hohlnadel ausgetrieben. Es können alle in Paraffin eingebetteten Untersuchungsobjekte gestanzt werden, z.B. Gewebe, eingebettete Zellen menschlichen, tierischen oder pflanzlichen Ursprungs, Mikroorganismen, virusinfizierte Zellen, Makromoleküle auf Trägermatrix und andere Partikel, etc. Die Stanzzylinder können z.B. in Eppendorf-Reaktionsgefäßen bei Raumtemperatur zeitlich unbegrenzt gelagert werden, was die Zusammenstellung von Stanzenbibliotheken ermöglicht und das gleichzeitige Bereithalten aller Gewebeblöcke unnötig macht.

Gemäß Fig. 3b werden für einen Multi-Block z.B. 96 verschiedene Gewebestanzzylinder F sowie ein Paraffinrohling, wie oben angegeben, hergestellt. Weiterhin wird eine konventionelle Einbettschale G ohne Modifikationen benötigt, die also keine Löcher aufweist.

Der Paraffinrohling wird dabei paßgenau in eine konventionelle Einbettschale G gelegt und mindestens ein Teil der Öffnungen wird mit Gewebestanzzylindern F beschickt. Bei diesem Vorgang sollte darauf geachtet werden, daß der Gewebestanzzylinder mit der glatten Seite, d.h. mit der Schnittfläche des Original-Paraffinblocks voran in den Paraffinrohling gesteckt wird, damit das zu untersuchende Gewebe auch im fertigen Multi-Block direkt angeschnitten wird. An exzentrischer Stelle (z.B. in einem 96er Block erste Reihe, dritter Hohlraum von rechts) wird ein Gewebestanzzylinder mit artfremdem Gewebe eingebracht, der sich vom Untersuchungsgut stark unterscheidet und deshalb eine einfache Orientierung des Schnittes auf dem Objektträger zuläßt. Sind alle Hohlräume des Paraffinrohlings mit Gewebestanzzylindern bestückt, wird der Rohling mit den Gewebestanzzylindern zu einem einheitlichen Paraffinblock verschmolzen, der sich in seinen technischen Eigenschaften nicht von einem Paraffinblock mit nur einer Gewebeprobe unterscheidet.

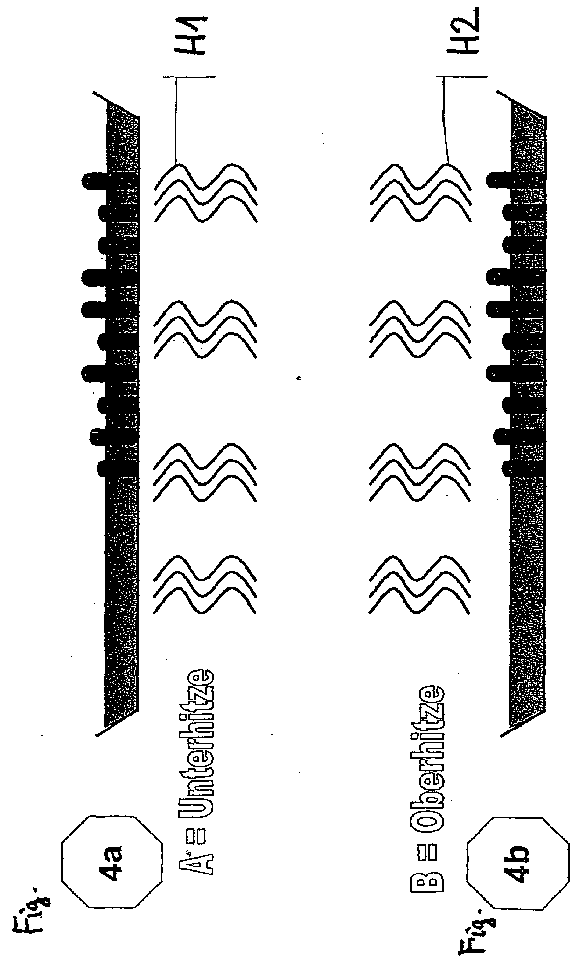

Dieser Vorgang des Verschmelzens ist in den Fig. 4a, b dargestellt. Die Einbettschale G mit dem durch Gewebestanzzylinder gefüllten Paraffinrohling wird vorzugsweise in einem Doppel-Schmelz-Verfahren zu einem homogenen Paraffinblock eingeschmolzen. Essentiell bei diesem Vorgang ist die Tatsache, daß das Doppel-Schmelz-Verfahren die originale Geometrie des Blockes erhält, d.h. die Gewebestanzzylinder während des Schmelzvorganges nicht umfallen oder anderweitig die originale Position verändern, was eine Zuordnung der Gewebeproben im Schnitt unmöglich machen würde. Der bestückte Paraffinrohling wird in der konventionellen Einbettschale auf eine regulierbare Heizplatte, wie eine Thermoplatte oder der Block einer PCR-Maschine, gelegt. Das Doppel-Schmelz-Verfahren beginnt mit langsamem Erhitzen von unten, solange bis über 50 % der Dicke des Paraffinblockes (aber nicht mehr als 80 %) sich verflüssigt haben (H1). Vorzugsweise wird dabei der bestückte Paraffinrohling für 10-20 Minuten auf 40°C vorgewärmt. Mit einem ein- bis mehrminütigen Impuls von 70 (max. 80) °C, dessen Länge im wesentlichen von der Heizleistung des verwendeten Gerätes bestimmt wird, werden die unteren 2 bis 3 mm (> 50 % < 80 %) des Rohling/Stanzzylinder-Ensembles durchgeschmolzen, ohne daß dabei der gesamte Block durchschmilzt. Der Multi-Block wird dann schnell auf 20°C abgekühlt und auf einem gut wärmeleitenden Material (Kupferplatte, Heizblock oder PCR-Maschine) gelagert. Durch die langsame Erhitzung wird erreicht, daß auch das Paraffin in den Gewebestanzzylindern sich mitverflüssigt, und so eine innige Verbindung zwischen dem Paraffin der Gewebestanzzylinder und dem unteren Teil des Paraffinrohlings beim Wiedererkalten gelingt. Dieser Schritt zusammen mit dem anschließend geschilderten zweiten Schmelzvorgang mit Oberhitze ist entscheidend für die Herstellung eines homogenen Multi-Blocks, der am Ende wie jeder normale Standard-Paraffinblock weiterverarbeitet werden kann.

Nach dem vollständigen Erkalten folgt der in Fig. 4d dargestellte zweite Teil des Doppel-Schmelz-Verfahrens, bei dem über Oberhitze (H2) analog zum vorher Gesagten erneut eine hitzebedingte Verflüssigung, jetzt aber des oberen Anteils des Paraffinrohlings mit eingesteckten Gewebestanzzylindern durchgeführt wird. Dabei wird der Multi-Block von oben mit Hilfe einer weiteren Wärmequelle (vorzugsweise einer Infrarot-Heizlampe) solange bestrahlt, bis der Multi-Block von oben geschmolzen ist, wiederum jedoch ohne den Multi-Block vollständig durchzuschmelzen. Eine gute Wärmeableitung im unteren Teil des Blockes ist für diesen Schritt Voraussetzung.

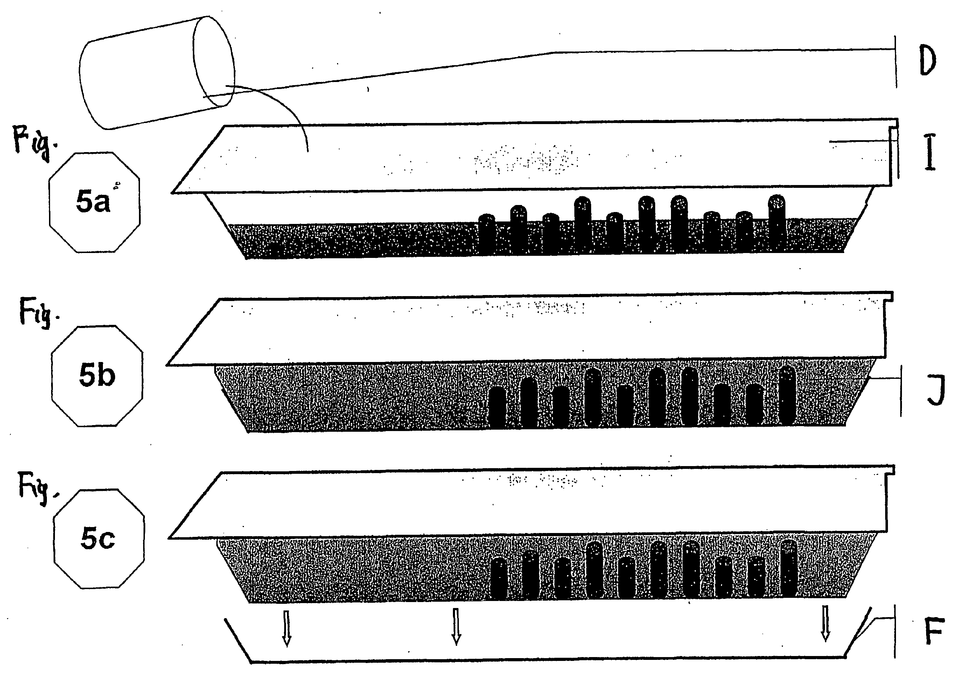

Auf das an der Oberfläche verflüssigte Paraffin wird gemäß Fig. 5a jetzt eine handelsübliche Einbettkassette aus Kunststoff (I), wie sie in der täglichen Routine zur Herstellung von Paraffinblöcken eingesetzt wird, aufgesetzt. Nun wird erneut vorerhitztes Paraffin (D), beispielsweise bei 65°C, eingefüllt, bis die verbliebenen Hohlräume vollständig mit Paraffin gefüllt sind und das Paraffin auch den Boden der Einbettkassette I vollständig bedeckt. Der auf diese Weise hergestellte Multi-Block wird anschließend auf Zimmertemperatur abgekühlt (ca. 4 h) und anschließend die fest eingegossene Einbettkassette durch Beklopfen aus der Einbettschale herausgelöst, wie in Fig. 5c dargestellt ist.

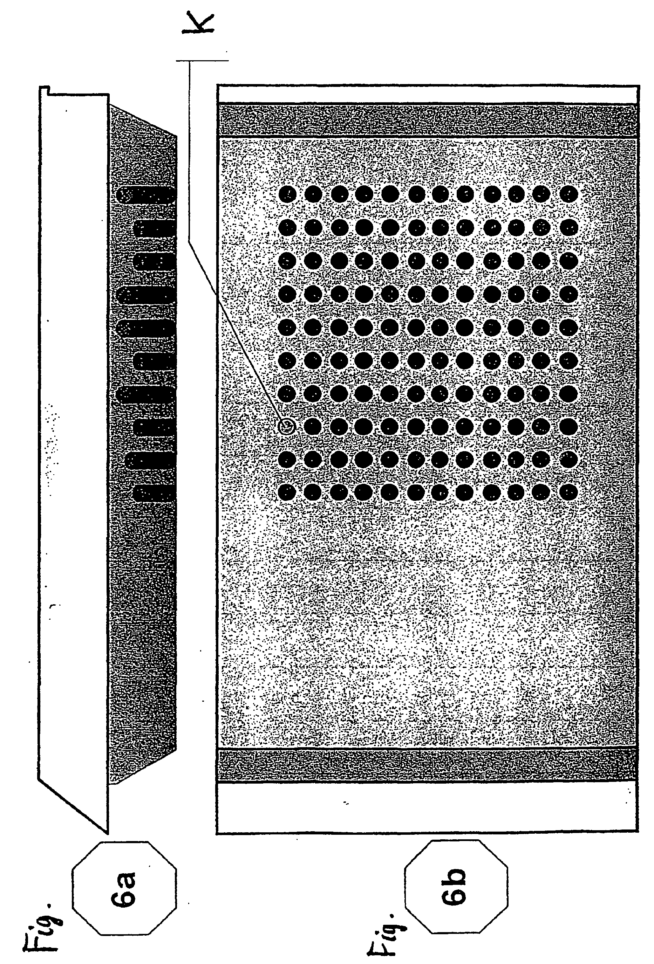

Ein fertiggestellter Paraffinblock ist in den Fig. 6a, b in einer Seitenansicht und einer Ansicht von unten dargestellt, wobei mit K eine Gewebeprobe aus artfremdem Gewebe oder Kunststoff zu Orientierungszwecken bezeichnet ist. Von einem derartigen Paraffinblock können in an sich bekannter Weise, beispielsweise mittels eines Mikrotoms oder dergleichen, von der unteren Hauptoberfläche des Blockes Gewebeschnitte abgeschnitten werden, die für die Mikroskopie in einer Dicke von 2-5 µm angefertigt werden können und auf einem Objektträger, wie einem Glasträger, befestigt werden können. Um eine eindeutige Orientierung aller in den Multi-Block eingebrachten Gewebestanzzylinder zu gewährleisten, besteht einer der Gewebestanzzylinder aus artfremdem Gewebe bzw. aus leicht schneidbarem Kunststoff (K). Dieser Markierungszylinder ist in asymmetrischer Position einzubringen, um auch bei Verdrehungen bzw. spiegelbildlichem Aufziehen (von der Rückseite) auf einen Objektträger jederzeit eine eindeutige, positive Identifizierungs- und Orientierungsmöglichkeit zu behalten.

Durch das weiter oben beschriebene sequentielle Doppel-Schmelzen des Multi-Blockes von zwei Seiten unter Verzicht auf das vollständige Durchschmelzen wird eine konstante Anordnung der Gewebestanzzylinder im Multi-Block garantiert. Alle Bereiche des Blockes werden dennoch sequentiell vollständig geschmolzen. Dieses Verfahren ermöglicht den Gewebeproben, sich innig mit dem Paraffin der Umgebung des neuen Multi-Blockes zu verbinden und vermeidet somit das Herausfallen einzelner Zylinderscheiben bzw. das sogenannte Auseinanderschwimmen auf dem Wasserbad bei der Herstellung von Gewebeschnitten. Da sich dieser Block von Paraffinblöcken mit nur einer Gewebeprobe technisch nicht mehr unterscheidet, kann er wie diese weiterverarbeitet werden und auf besondere Hilfsmittel verzichtet werden.

Das beschriebene Verfahren kann auf vielfältige Weise verändert und modifiziert werden. Beispielsweise kann als Material für den Materialrohling anstelle von Paraffin ein anderes geeignetes, fließfähiges und härtbares Material, wie beispielsweise ein geeignetes Epoxidharz oder dergleichen, verwendet werden. Ferner kann vorgesehen sein, daß die für das Einbringen der Gewebeproben vorgesehenen Öffnungen in dem Materialrohling nicht als Durchgangsöffnungen ausgebildet sind, sondern in einer bestimmten Tiefe des Materialrohlings enden, wobei eine andere hierfür geeignete Gußform verwendet werden muß. Dies bedeutet, daß nach Fertigstellung des Materialblocks mit den multiplen Gewebeproben eine bestimmte Dicke abgetragen werden muß, bevor Gewebeschnitte mit multiplen Gewebeproben abgeschnitten werden können.

## Patentansprüche

1. Verfahren zur Herstellung eines Materialblocks (J) enthaltend eine Mehrzahl von Untersuchungsobjekten, **dadurch gekennzeichnet, daß**
a) ein Materialrohling (E2) enthaltend eine Mehrzahl von Öffnungen für die Aufnahme von Materialzylindern (F) **dadurch** hergestellt wird, dass mittels einer geeignet ausgebildeten Gussform ein Materialrohling (E2) mit einer regelmäßigen Anordnung von Öffnungen geformt wird, die sich ausgehend von einer ersten Hauptoberfläche des Materialrohlings (E2) in Richtung auf eine zweite Hauptoberfläche des Materialrohlings (E2) bis in eine bestimmte Tiefe erstrecken, und
b) in mindestens einen Teil der vorhandenen Öffnungen des Materialrohlings (E2) Materialzylinder (F) eingebracht und mit dem sie umgebenden Material des Materialrohlings (E2) fest verbunden werden.

2. Verfahren zur Herstellung dünner Probenschnitte enthaltend eine Mehrzahl von Untersuchungsobjekten, **dadurch gekennzeichnet, daß** ein Materialblock (J) gemäß Anspruch 1 hergestellt wird und danach von einer seiner Hauptoberflächen, an der die in ihn eingebrachten Materialzylinder (F) nach außen freigelegt sind, Probenschnitte, vorzugsweise in einer Dicke von 2-5 µm und insbesondere unter Verwendung eines Mikrotoms, abgeschnitten werden.

3. Verfahren nach einem der vorhergehenden Ansprüche,
**dadurch gekennzeichnet, daß**
- die Öffnungen als Durchgangsöffnungen ausgebildet werden.

4. Verfahren nach einem der vorhergehenden Ansprüche,
**dadurch gekennzeichnet, daß**
- die Gußform ein insbesondere aus Aluminium gefertigtes Substrat aufweist, von dessen einer Hauptoberfläche eine der zu formenden Anordnung von Öffnungen des Materialrohlings (E2) entsprechende regelmäßige Anordnung zapfenförmiger Elemente wegragt,
- das Material des zu formenden Materialrohlings (E2) in fließfähiger Form auf die Hauptoberfläche des Substrats aufgebracht und ausgehärtet wird, und
- der Materialrohling (E2) von dem Substrat entfernt wird.

5. Verfahren nach Anspruch 4,
**dadurch gekennzeichnet, daß**
- eine erste Einbettschale (C), die in ihrer Bodenfläche eine der Anordnung zapfenförmiger Elemente entsprechende Anordnung Löcher aufweist, vor dem Aufbringen des Materials des zu formenden Materialrohlings (E2) derart auf die Hauptoberfläche des Substrats aufgebracht wird, daß die zapfenförmigen Elemente durch die Löcher hindurchtreten und die Bodenfläche schlüssig auf der Hauptoberfläche zu liegen kommt,
- die erste Einbettschale (C) nach dem Aushärten des Materials mit diesem von der Gußform abgehoben wird, und
- anschließend von dem geformten Materialrohling (E2) entfernt wird.

6. Verfahren nach Anspruch 1,
**dadurch gekennzeichnet, daß**
- die Materialzylinder (F) stab- oder zylinderförmig sind und durch Ausstanzen aus Probenblöcken gewonnen werden, in denen die Untersuchungsobjekte in ein Einbettungsmaterial wie Paraffin eingebettet sind.

7. Verfahren nach Anspruch 3,
**dadurch gekennzeichnet, daß**
- vor dem Einbringen der Materialzylinder (F) in die Öffnungen des Materialrohlings (E2) dieser in eine zweite Einbettschale (G) eingesetzt wird, und
- anschließend die Materialzylinder (F) in die Durchgangsöffnungen auf der der zweiten Einbettschale (G) abgewandten Hauptoberfläche des Materialrohlings (E2) eingeschoben werden, bis sie auf der gegenüberliegenden Seite der Durchgangsöffnung an die Bodenfläche der zweiten Einbettschale (G) anstoßen.

8. Verfahren nach Anspruch 1,
**dadurch gekennzeichnet, daß**
- zu Orientierungszwecken ein Materialzylinder (K) artfremdes Gewebe enthält oder aus Kunststoff besteht und innerhalb der regelmäßigen Anordnung in einer asymmetrischen Position eingebracht wird.

9. Verfahren nach Anspruch 1,
**dadurch gekennzeichnet, daß**
- die in den Materialrohling (E2) eingebrachten Materialzylinder (F) durch mindestens einen Temperaturbehandlungsschritt mit dem sie jeweils umgebenden Material des Materialrohlings (E2) verbunden bzw. verschmolzen werden.

10. Verfahren nach Anspruch 9,
**dadurch gekennzeichnet, daß**
- die Materialzylinder (F) durch zwei Temperaturbehandlungsschritte, bei denen jeweils auf einer Seite des Materialrohlings (E2) Wärme zugeführt wird, mit dem sie jeweils umgebenden Material des Materialrohlings (E2) verbunden bzw. verschmolzen werden.

11. Verfahren nach Anspruch 1 oder 7,
**dadurch gekennzeichnet, daß**
- auf der Seite der Oberfläche des Materialrohlings (E2), von der die Materialzylinder (F) eingebracht wurden, eine Einbettkassette (I) derart angebracht wird, daß ihr Boden einen Abstand von der Oberfläche des Materialrohlings (E2) einhält,
- ein fließfähiges, härtbares Material (D), insbesondere dasselbe Material wie das des Materialrohlings (E2), in die Einbettkassette (I) eingefüllt wird, bis verbliebene Hohlräume vollständig mit dem Material (D) gefüllt werden und das Material (D) den Boden der Einbettkassette (I) bedeckt, und
- eine gegebenenfalls noch auf der gegenüberliegenden Seite vorhandene zweite Einbettschale (G) entfernt wird.

12. Verfahren nach einem der vorhergehenden Ansprüche,
**dadurch gekennzeichnet, daß**
- das Material des Materialrohlings (E2) Paraffin, ein Epoxid-Harz oder ein anderes fließfähiges und härtbares Material ist.

## Claims

1. A method for the production of a material block (J) containing a plurality of test samples, **characterized in that**
a) a material blank (E2) containing a plurality of openings to accommodate cylinders of material (F) is produced by creating a material blank (E2) by means of an appropriately shaped casting mold, so that a regular arrangement of openings extend from an initial main surface of the material blank (E2) in the direction of a second main surface of the material blank (E2) down to a specific depth, and
b) in at least one portion of the available openings in the material blank (E2), cylinders of material (F) are firmly bonded with the material of the material blank (E2) surrounding them.

2. A method for the production of thin sample sections containing a plurality of test objects, **characterized in that**
- a material block (J) is produced as set forth in claim 1, and then sample sections, preferably in a thickness of 2-5 mm and particularly using a microtome, are cut from one of its main surfaces, on which the cylinders of material (F) inserted into the material block are exposed.

3. The method as set forth in any of the preceding claims, **characterized in that**
- the openings are in the form of openings that completely penetrate the block.

4. The method as set forth in any of the preceding claims, **characterized in that**
- the casting mold comprises a substrate, especially made of aluminum, from one main surface of which a regular arrangement of peg-shaped elements projects, corresponding to the arrangement of openings in the material blank (E2) to be formed,
- the material of the material blank to be formed (E2) is applied in a free-flowing form to the main surface of the substrate and is completely hardened, and
- the material blank (E2) is removed from the substrate.

5. The method as set forth in claim 4, **characterized in that**
- prior to application of the material that will form the material blank (E2), an initial embedding tray (C), having an arrangement of holes in its bottom surface that corresponds to the arrangement of peg-shaped elements, is placed onto the main surface of the substrate in such a way that the peg-shaped elements protrude through the holes, and the bottom surface lies upon and in full contact with the main surface,
- once the material has completely hardened, the initial embedding tray (C) is lifted together with the material from the casting mold, and
- is subsequently removed from the fully-formed material blank (E2).

6. The method as set forth in claim 1, **characterized in that**
- the cylinders of material (F) are rod or cylinder-shaped, and are obtained by being punched out of sample blocks in which the test objects are embedded in an embedding material such as paraffin.

7. The method as set forth in claim 3, **characterized in that**
- prior to inserting the cylinders of material (F) into the openings in the material blank (E2), said material blank is placed into a second embedding tray (G), and
- the cylinders of material (F) are then inserted into the openings that completely penetrate the block on the mean surface of the material blank (E2) opposite to the second embedding tray (G) until they come up against the bottom surface of the second embedding tray (G) on the opposite end of the opening that completely penetrates the block.

8. The method as set forth in claim 1, **characterized in that**
- a material cylinder (K) consisting of a foreign tissue or plastic is present for orientation purposes, and is inserted in an asymmetrical position within the regular arrangement.

9. The method as set forth in claim 1, **characterized in that**
- the cylinders of material (F) inserted into the material blank (E2) are melted and/or bonded to the surrounding material of the material blank (E2) by means of at least one temperature treatment step.

10. The method as set forth in claim 9, **characterized in that**
- the cylinders of material (F) are melted and/or bonded to the material of the material blank (E2) surrounding them by means of two temperature treatment steps, whereby heat is supplied to each side of the material blank (E2).

11. The method as set forth in claim 1 or 7, **characterized in that**
- an embedding cassette (I) is affixed to the side of the material blank (E2) surface from which the cylinders of material (F) were inserted, so that the base of the embedding cassette (I) maintains a distance from the surface of the material blank (E2),
- a free-flowing, hardenable material (D), particularly the same material as that of the material blank (E2), is poured into the embedding cassette (I) until the remaining cavities are completely filled with the material (D), and the material (D) covers the base of the embedding cassette (I), and
- a second embedding tray (G), which is also present on the opposite side if necessary, is removed.

12. The method as set forth in any of the preceding claims, **characterized in that**
- the material of the material blank (E2) is paraffin, an epoxy resin or some other free-flowing, hardenable material.

## Revendications

1. Procédé de production d'un bloc de matière (J) contenant une pluralité d'objets à analyser,
**caractérisé en ce que**
a) on réalise une ébauche de matière (E2) présentant une pluralité d'ouvertures pour recevoir des cylindres de matière (F) en moulant, au moyen d'un moule de coulée réalisé de façon appropriée, une ébauche de matière (E2) pourvue d'une disposition régulière d'ouvertures qui s'étendent à partir d'une première surface principale de l'ébauche de matière (E2) en direction d'une seconde surface principale de l'ébauche de matière (E2) jusqu'à une profondeur déterminée, et
b) on introduit des cylindres de matière (F) dans une partie au moins des ouvertures existantes de l'ébauche de matière (E2) et on les relie fermement à la matière qui les entoure de l'ébauche de matière (E2).

2. Procédé de production de tranches minces d'échantillon contenant une pluralité d'objets à analyser,
**caractérisé en ce que**
- l'on produit un bloc de matière (J) selon la revendication 1, et ensuite on découpe à partir de l'une de ses surfaces principales au niveau laquelle les cylindres de matière (F), introduits dans ledit bloc, sont mis à découvert vers l'extérieur, des tranches d'échantillons, de préférence d'une épaisseur de 2 à 5 µm et en particulier en utilisant un microtome.

3. Procédé selon l'une des revendications précédentes,
**caractérisé en ce que**
- les ouvertures sont réalisées sous forme d'ouvertures traversantes.

4. Procédé selon l'une des revendications précédentes,
**caractérisé en ce que**
- le moule de coulée présente un substrat fabriqué en particulier à partir d'aluminium, avec un agencement régulier d'éléments en forme de tenon qui fait saillie depuis l'une des surfaces principales dudit substrat et qui correspond à l'agencement à former d'ouvertures de l'ébauche de matière (E2),
- on applique la matière de l'ébauche de matière à former (E2) dans un état capable de s'écouler sur la surface principale du substrat, et on la fait durcir, et
- on enlève l'ébauche de matière (E2) depuis le substrat.

5. Procédé selon la revendication 4, **caractérisé en ce que**
- avant d'appliquer la matière de l'ébauche de matière à former (E2), on applique sur la surface principale du substrat une première coque d'incorporation (C) qui présente dans sa surface de fond un agencement de trous correspondant à l'agencement d'éléments en forme de tenon, de telle sorte que les éléments en forme de tenons traversent les trous et que la surface de fond vient se placer en contant intime sur la surface principale,
- après durcissement de la matière, on enlève la première coque d'incorporation (C) conjointement avec celle-ci depuis le moule de coulée, et
- ensuite on enlève l'ébauche de matière moulée (E2).

6. Procédé selon la revendication 1, **caractérisé en ce que**
- les cylindres de matière (F) sont en forme de barreaux ou de cylindres et on les obtient par découpe à partir de blocs d'échantillons dans lesquels les objets à analyser sont incorporés dans une matière d'incorporation, telle que de la paraffine.

7. Procédé selon la revendication 3, **caractérisé en ce que**
- avant d'introduire les cylindres de matière (F) dans les ouvertures de l'ébauche de matière (E2), on la met en place dans une seconde coque d'incorporation (G), et
- ensuite, on pousse les cylindres de matière (F) dans les ouvertures traversantes sur la surface principale, détournée de la seconde coque d'incorporation (G), de l'ébauche de matière (E2) jusqu'à ce qu'ils viennent buter contre la surface de fond de la seconde coque d'incorporation (G) sur le côté opposé de l'ouverture traversante.

8. Procédé selon la revendication 1, **caractérisé en ce que**
- à des fins d'orientation, un cylindre de matière (K) contient du tissu de type étranger ou est constitué de matière plastique, et on l'introduit dans une position asymétrique à l'intérieur de l'agencement régulier.

9. Procédé selon la revendication 1, **caractérisé en ce que**
- par au moins une étape de traitement thermique, on relie ou on réunit par fusion les cylindres de matière (F), introduits dans l'ébauche de matière (E2), avec la matière de l'ébauche de matière (E2) qui les entoure.

10. Procédé selon la revendication 9, **caractérisé en ce que**
- on relie ou on réunit par fusion les cylindres de matière (F) avec la matière de l'ébauche de matière (E2) qui les entoure par deux étapes de traitement thermique dans lesquelles la chaleur est apportée sur un côté respectif de l'ébauche de matière (E2).

11. Procédé selon l'une ou l'autre des revendications 1 et 7, **caractérisé en ce que**
- sur le côté de la surface de l'ébauche de matière (E2) depuis lequel on introduit les cylindres de matière (F), on monte une cassette d'incorporation (I) de telle sorte que son fond maintient une distance à la surface de l'ébauche de matière (E2),
- on remplit dans la cassette d'incorporation (I) une matière capable de s'écouler et durcissable (D), en particulier la même matière que celle de l'ébauche de matière (E2), jusqu'à ce que des cavités résiduelles soient complètement remplies de la matière (D) et que la matière (D) recouvre le fond de la cassette d'incorporation (I), et
- on enlève une seconde coque d'incorporation (G) qui se présente le cas échéant encore sur le côté opposé.

12. Procédé selon l'une des revendications précédentes, **caractérisé en ce que**
- la matière de l'ébauche de matière (E2) est de la paraffine, une résine époxy ou une autre matière capable de s'écouler et durcissable.
